(19) Europäisches Patentamt / European Patent Office / Office européen des brevets

(11) **EP 4 184 238 A1**

(12) **EUROPEAN PATENT APPLICATION**
published in accordance with Art. 153(4) EPC

(43) Date of publication:
**24.05.2023 Bulletin 2023/21**

(21) Application number: **21845189.6**

(22) Date of filing: **09.07.2021**

(51) International Patent Classification (IPC):
$G02B\ 30/31^{(2020.01)}$     $G02B\ 27/01^{(2006.01)}$
$G09G\ 5/00^{(2006.01)}$     $G09G\ 5/36^{(2006.01)}$
$H04N\ 13/125^{(2018.01)}$     $H04N\ 13/305^{(2018.01)}$
$H04N\ 13/31^{(2018.01)}$     $H04N\ 13/317^{(2018.01)}$
$H04N\ 13/366^{(2018.01)}$

(52) Cooperative Patent Classification (CPC):
G02B 27/01; G02B 30/31; G09G 5/00; G09G 5/36;
H04N 13/125; H04N 13/305; H04N 13/31;
H04N 13/317; H04N 13/366

(86) International application number:
**PCT/JP2021/026013**

(87) International publication number:
**WO 2022/019154 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2020 JP 2020123919**

(71) Applicant: **Kyocera Corporation**
**Kyoto-shi Kyoto 612-8501 (JP)**

(72) Inventor: **KUSAFUKA, Kaoru**
**Kyoto-shi, Kyoto 612-8501 (JP)**

(74) Representative: **TBK**
**Bavariaring 4-6**
**80336 München (DE)**

(54) **THREE-DIMENSIONAL DISPLAY DEVICE**

(57) A three-dimensional display device includes a display panel including an active area to display, in the active area, a composite image including a first image and a second image having parallax with respect to the first image, a parallax barrier that defines a traveling direction of image light emitted from the active area, a position obtainer that obtains a position of a first eye of a viewer and a position of a second eye of the viewer different from the first eye, and a controller that causes the active area to display the composite image based on the positions of the first and second eyes. The active area includes multiple subpixels. The controller divides a screen of the display panel into multiple areas each having a specific reference index, and changes a parallax image with respect to the reference index.

FIG. 1

**Description**

TECHNICAL FIELD

The present disclosure relates to a three-dimensional (3D) display device.

BACKGROUND OF INVENTION

A 3D display device including an optical element is an example known technique.

SUMMARY

In an aspect of the present disclosure, a three-dimensional display device includes a display panel including an active area to display, in the active area, a composite image including a first image and a second image having parallax with respect to the first image, an optical element that defines a traveling direction of image light emitted from the display panel, a position obtainer that obtains a first position being a position of a first eye of a viewer and a second position being a position of a second eye of the viewer different from the first eye, and a controller that causes the display panel to display the composite image with an arrangement of the first image and the second image changed based on at least one of the first position or the second position. The active area includes a plurality of display areas. The controller generates the composite image for each of the plurality of display areas by changing an arrangement of the first image and the second image based on one of a plurality of reference indexes corresponding to the plurality of display areas and at least one of the first position or the second position. The controller causes the display panel to display the generated composite image.

In another aspect of the present disclosure, a three-dimensional display device includes a display panel including an active area to display, in the active area, a composite image including a first image and a second image having parallax with respect to the first image, an optical element that defines a traveling direction of image light emitted from the display panel, a position obtainer that obtains a first position being a position of a first eye of a viewer and a second position being a position of a second eye of the viewer different from the first eye, and a controller that causes the display panel to display the composite image based on the first position and the second position obtained by the position obtainer. The active area includes a plurality of display areas. The controller generates the composite image for each of the plurality of display areas by changing an arrangement of the first image and the second image with respect to one of a plurality of switching origins corresponding to the plurality of display areas. The controller causes the display panel to display the generated composite image.

BRIEF DESCRIPTION OF THE DRAWINGS

The objects, features, and advantages of the present disclosure will become more apparent from the following detailed description and the drawings.

FIG. 1 is a diagram of a 3D display system including a 3D display device according to an embodiment viewed in a vertical direction.
FIG. 2 is a diagram of a display panel illustrated in FIG. 1 viewed in a depth direction.
FIG. 3 is a diagram of a parallax barrier illustrated in FIG. 1 viewed in the depth direction.
FIG. 4 is a diagram describing left viewable sections on the display panel illustrated in FIG. 1.
FIG. 5 is a diagram describing right viewable sections on the display panel illustrated in FIG. 1.
FIG. 6 is a diagram describing binocular viewable sections in the 3D display system illustrated in FIG. 1.
FIG. 7 is a diagram describing in detail the left viewable sections on the display panel in accordance with the position of a left eye.
FIG. 8 is a diagram describing information for identifying the position of the left eye and the position of a right eye.
FIG. 9 is an example image table showing, with an interocular distance being a reference distance, the positions of the left eye and the right eye, and the corresponding images to be displayed by subpixels.
FIG. 10 is a flowchart of example processing by the 3D display device without the interocular distance being the reference distance.
FIG. 11 is a schematic diagram of the 3D display device with an optical element being a lenticular lens.
FIG. 12 is a diagram of an example head-up display (HUD) incorporating the 3D display system according to the embodiment.
FIG. 13 is a diagram of an example movable body incorporating the HUD illustrated in FIG. 11.

DESCRIPTION OF EMBODIMENTS

As a three-dimensional (3D) display device with the structure that forms the basis of a 3D display device according to one or more embodiments of the present disclosure, a known 3D display device for enabling glasses-free 3D image viewing includes an optical element that directs a part of light from a display panel to reach a right eye and another part of the light to reach a left eye.

The emitted light is reflected by a reflector such as a mirror. The reflecting surface of the reflector generates distortion. The distortion is removed using, for example, another optical member.

The 3D display device according to one or more embodiments of the present disclosure will now be described with reference to the accompanying drawings.

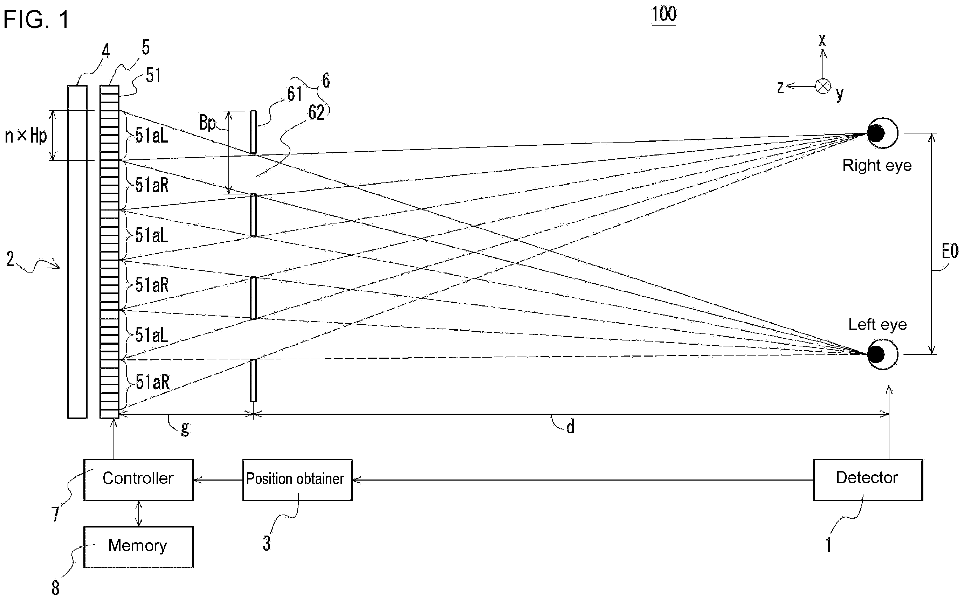

FIG. 1 is a diagram of a 3D display system 100 including a 3D display device 2 according to an embodiment viewed from above. The structure that forms the basis of the present embodiment will be described first. The 3D display system 100 according to an embodiment of the present disclosure includes a detector 1 and the 3D display device 2.

The detector 1 detects the positions of a left eye (first eye) and a right eye (second eye) of a viewer and outputs the positions to the 3D display device 2. The detector 1 may include, for example, a camera. The detector 1 may capture an image of the face of the viewer with the camera. The detector 1 may use the image including the face of the viewer captured with the camera to detect the positions of the left and right eyes. The detector 1 may use an image captured with a single camera to detect the positions of the left and right eyes as coordinates in a 3D space. The detector 1 may use images captured with two or more cameras to detect the positions of the left and right eyes as coordinates in a 3D space.

The detector 1 may include no camera and may be connected to an external camera. The detector 1 may include an input terminal for receiving signals from the external camera. The external camera may be connected to the input terminal directly. The external camera may be connected to the input terminal indirectly through a shared network. The detector 1 including no camera may include an input terminal for receiving image signals from a camera. The detector 1 including no camera may use the image signals received through the input terminal to detect the positions of the left and right eyes.

The detector 1 may include, for example, a sensor. The sensor may be an ultrasonic sensor or an optical sensor. The detector 1 may detect the position of the head of the viewer by the sensor, and the positions of the left and right eyes based on the position of the head. The detector 1 may use a single sensor or two or more sensors to detect the positions of the left and right eyes as coordinates in a 3D space.

The 3D display system 100 may not include the detector 1. When the 3D display system 100 does not include the detector 1, the 3D display device 2 may include an input terminal for receiving signals from an external detector. The external detector may be connected to the input terminal. The external detector may use electrical signals or optical signals as transmission signals transmitted to the input terminal. The external detector may be connected to the input terminal indirectly through a shared communication network. The 3D display device 2 may receive positional coordinates indicating the positions of the left and right eyes input from the external detector.

The 3D display device 2 may include a position obtainer 3, an illuminator 4, a display panel 5, a parallax barrier 6 as an optical element, a controller 7, and a memory 8. The display panel 5 displays a composite image including a first image and a second image having parallax with respect to the first image. The parallax barrier 6 defines a traveling direction of image light emitted from the display panel 5. The position obtainer 3 obtains the positions of the viewer's left eye being the first eye and the right eye being the second eye. The controller 7 generates a composite image by changing an arrangement of a left-eye image and a right-eye image based on the positions of the left eye and the right eye.

The controller 7 causes the display panel 5 to display the composite image. The display panel 5 includes multiple display areas in its active area. Each of the multiple display areas corresponds to one of multiple reference indexes. The controller 7 generates a composite image to be displayed on a display area with respect to the reference index corresponding to the display area. A procedure for generating the composite image will be described in detail later.

The position obtainer 3 obtains the positions of the left eye and the right eye detected by the detector 1.

The illuminator 4 may illuminate a surface of the display panel 5. The illuminator 4 may include, for example, a light source, a light guide plate, a diffuser plate, and a diffuser sheet. The illuminator 4 emits, from the light source, illumination light that then spreads uniformly for illuminating the surface of the display panel 5 through, for example, the light guide plate, the diffuser plate, or the diffuser sheet. The illuminator 4 may emit the uniform light toward the display panel 5.

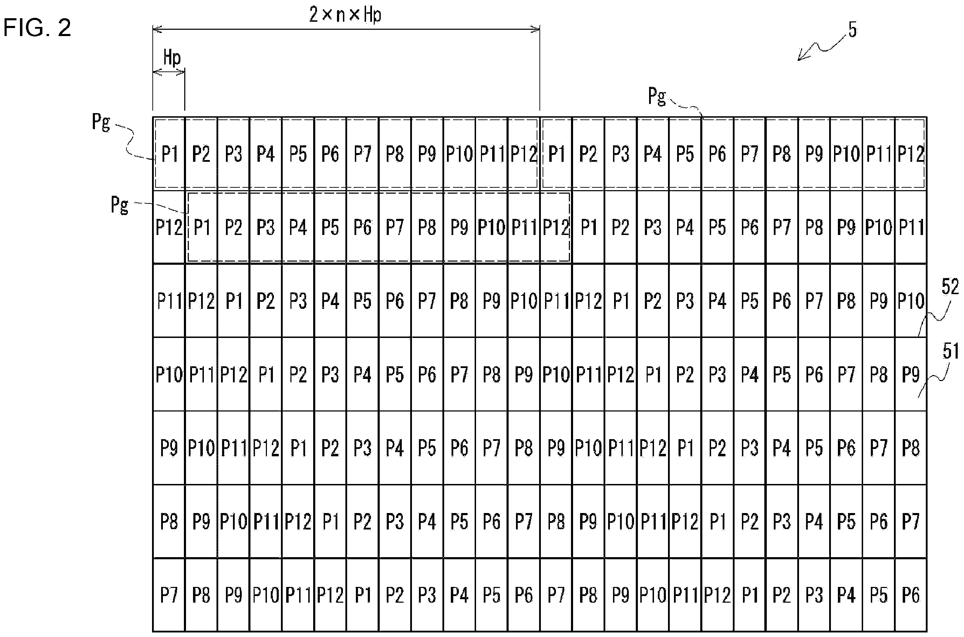

The display panel 5 may be, for example, a transmissive liquid crystal display panel. As illustrated in FIG. 2, the display panel 5 includes a planar active area 51 including multiple divisional sections. The active area 51 displays a composite image. The composite image includes a left-eye image (first image) and a right-eye image (second image) having parallax with respect to the left-eye image (described later). The composite image may include a third image described later. The divisional sections are defined by a black matrix 52 in a grid in a first direction and in a second direction orthogonal to the first direction. The direction orthogonal to the first and second directions is referred to as a third direction. The first direction may be referred to as a horizontal direction. The second direction may be referred to as a vertical direction. The third direction may be referred to as a depth direction. However, the first, second, and third directions are not limited to the directions referred to above. In the drawings, the first direction refers to x-direction, the second direction to y-direction, and the third direction to z-direction.

Each divisional section corresponds to one subpixel. Thus, the active area 51 includes multiple subpixels arranged in a grid in the horizontal and vertical directions.

Each subpixel has one of the colors red (R), green (G), and blue (B). One pixel may be a set of three subpixels with R, G, and B. One pixel may be referred to as one picture element. For example, multiple subpixels included in one pixel are arranged in the horizontal direction. For example, subpixels having the same color are arranged in the vertical direction. The display panel 5 is not limited to a transmissive liquid crystal panel but may be another display panel 5 such as an organic electroluminescent (EL) display. For the display panel 5 being a self-luminous display panel, the 3D display device 2 may not include the illuminator 4.

As described above, multiple subpixels arranged in the active area 51 form subpixel groups Pg. The subpixel groups Pg are repeatedly arranged in the horizontal direction. The subpixel groups Pg are repeatedly arranged in the vertical direction at positions shifted by one subpixel in the horizontal direction from the corresponding subpixels. The subpixel groups Pg each include subpixels in predetermined rows and columns. More specifically, the subpixel groups Pg each include $(2 \times n \times b)$ subpixels P1 to P$(2 \times n \times b)$, which are consecutively arranged in b row(s) in the vertical direction and in $2 \times n$ columns in the horizontal direction. In the example illustrated in FIG. 2, n is 6, and b is 1. The active area 51 includes the subpixel groups Pg each including one subpixel in the vertical direction and 12 continuous subpixels P1 to P12 arranged in the horizontal direction. In the example illustrated in FIG. 2, some of the subpixel groups Pg are denoted by reference signs.

Each subpixel group Pg is the smallest unit controllable by the controller 7 (described later) to display an image. The subpixels P1 to P$(2 \times n \times b)$ included in each subpixel group Pg with the same identification information are controlled by the controller 7 at the same time. For example, the controller 7 switches the image to be displayed by the subpixels P1 from the left-eye image to the right-eye image at the same time in all the subpixel groups Pg.

Parallax Barrier

As illustrated in FIG. 1, the parallax barrier 6 is planar along the active area 51, and arranged at a predetermined distance (gap) g from the active area 51. The parallax barrier 6 may be located opposite to the illuminator 4 from the display panel 5. The parallax barrier 6 may be located between the display panel 5 and the illuminator 4.

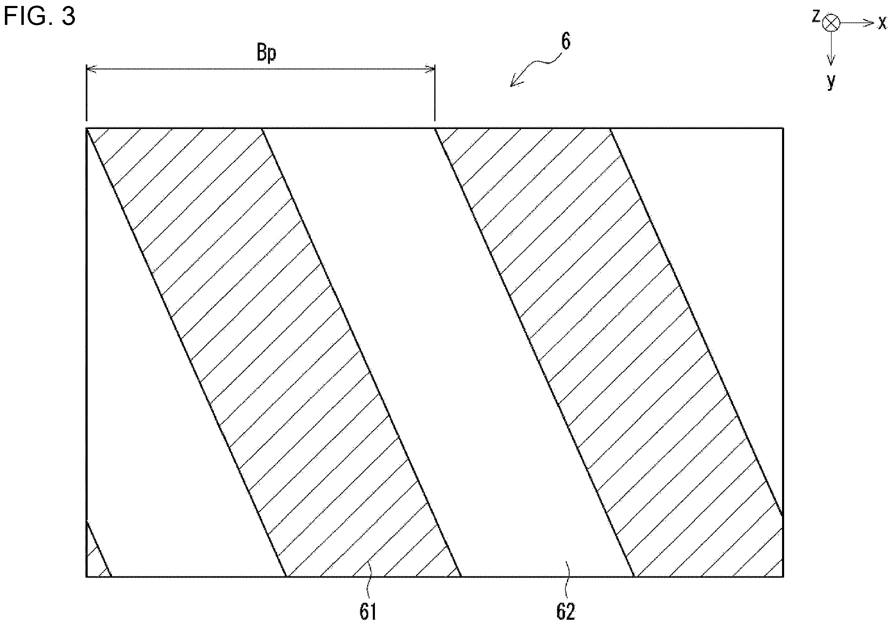

The parallax barrier 6 defines a traveling direction of image light from the subpixels for each of multiple transmissive portions 62. The traveling direction is the direction in which image light travels. As illustrated in FIG. 3, the transmissive portions 62 are strip areas each elongated in a predetermined direction in the plane. The predetermined direction is at a predetermined angle other than zero with the vertical direction. As illustrated in FIG. 1, the parallax barrier 6 defines the direction of image light from each of the subpixels arranged in the active area 51 to define parts in the active area 51 viewable with the eyes of the viewer. Parts in the active area 51 emitting image light that reaches the positions of the eyes of the viewer are hereafter referred to as viewable sections 51a. Parts in the active area 51 emitting image light that reaches the position of the left eye of the viewer are hereafter referred to as left viewable sections 51aL (first viewable sections). Parts in the active area 51 emitting image light that reaches the position of the right eye of the viewer are referred to as right viewable sections 51aR (second viewable sections).

More specifically, as illustrated in FIG. 3, the parallax barrier 6 includes multiple light-blocking portions 61 for blocking image light. The light-blocking portions 61 define transmissive portions 62 between adjacent light-blocking portions 61. The transmissive portions 62 have a higher light transmittance than the light-blocking portions 61. The light-blocking portions 61 have a lower light transmittance than the transmissive portions 62.

The transmissive portions 62 are parts of the parallax barrier 6 to transmit light incident on the parallax barrier 6. The transmissive portions 62 may transmit light with a transmittance of a first predetermined value or greater. The first predetermined value may be, for example, substantially 100% or a value less than 100%. The first predetermined value can be a value less than 100%, such as 80% or 50%, when image light emitted from the active area 51 falls within the range of good visibility. The light-blocking portions 62 are parts of the parallax barrier 6 to substantially block light incident on the parallax barrier 6. In other words, the light-blocking portions 62 prevent an image displayed in the active area 51 on the display panel 5 from being viewable with the eyes of the viewer. The light-blocking portions 62 may block light with a transmittance of a second predetermined value or less. The second predetermined value may be, for example, substantially 0% or a greater value close to 0%, such as 0.5%, 1%, or 3%. The first predetermined value can be several times, or for example, 10 times, greater than the second predetermined value.

The transmissive portions 62 and the light-blocking portions 61 extend in a predetermined direction along the active area 51. The transmissive portions 62 and the light-blocking portions 61 are arranged alternately in a direction orthogonal to the predetermined direction. The transmissive portions 62 define the traveling direction of image light from each of the subpixels.

As illustrated in FIG. 1, a barrier pitch Bp as an interval at which the transmissive portions 62 are arranged in the horizontal direction and the gap g between the active area 51 and the parallax barrier 6 are determined to satisfy Formula 1 and Formula 2 below using an optimum viewing distance d and a reference distance E0.

$$E0:d = (n \times Hp):g \qquad (1)$$

$$d:Bp = (d + g):(2 \times n \times Hp) \qquad (2)$$

The optimum viewing distance d is the distance between the right eye or the left eye of the viewer and the parallax barrier 6. At the optimum viewing distance d, the horizontal length of each viewable section 51a is equivalent to n subpixels. The direction of a straight line passing through the right eye and the left eye (interocular direction) corresponds to the horizontal direction. The reference distance E0 is a reference interocular distance E of the viewer. The reference distance E0 may be, for example, 61.1 to 64.4 mm, as calculated through studies conducted by the National Institute of Advanced Industrial Science and Technology. Hp is the horizontal length of a subpixel as illustrated in FIG. 2.

The parallax barrier 6 may be a film or a plate with a transmittance less than the second predetermined value. In this case, the light-blocking portions 61 are parts of the film or the plate. The transmissive portions 62 are slits in the film or the plate. The film may be formed from resin or another material. The plate may be formed from resin, metal, or another material. The parallax barrier 6 may be formed from a material other than a film or a plate. The parallax barrier 6 may include a base made of a light-blocking material or of a material containing an additive with light-blocking properties.

The parallax barrier 6 may include a liquid crystal shutter. The liquid crystal shutter can control the light transmittance in accordance with a voltage applied. The liquid crystal shutter may include multiple pixels and control the light transmittance for each pixel. The liquid crystal shutter can form a portion with a high light transmittance or a portion with a low light transmittance in an intended shape. For the parallax barrier 6 being a liquid crystal shutter, the transmissive portions 62 may have a transmittance of the first predetermined value or greater. For the parallax barrier 6 being a liquid crystal shutter, the light-blocking portions 61 may have a transmittance of the second predetermined value or less.

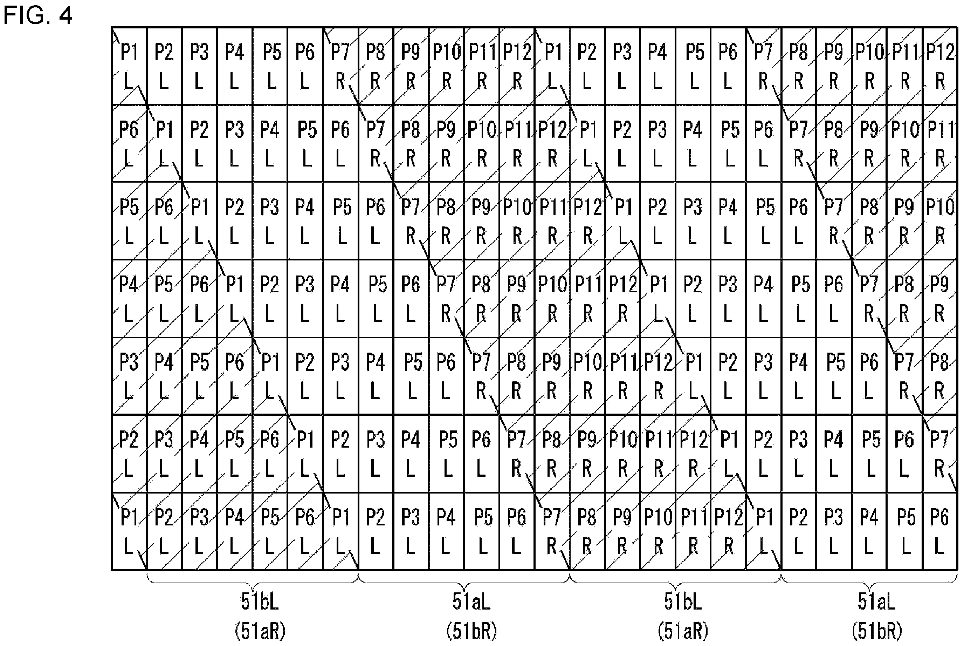

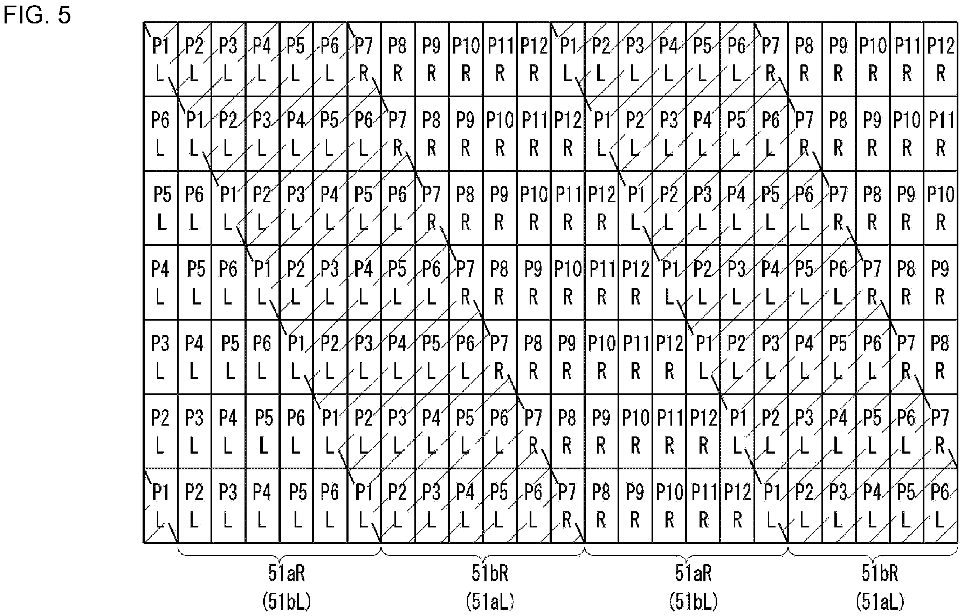

In this structure, the parallax barrier 6 transmits image light from selected subpixels in the active area 51 through the transmissive portions 62 to reach the viewer's right eye. The parallax barrier 6 transmits image light from the other subpixels through the transmissive portions 62 to reach the viewer's left eye. An image viewable to the viewer when the image light reaches each of the viewer's left and right eyes will now be described in detail with reference to FIGs. 4 and 5.

Parallax Image

As described above, the left viewable sections 51aL in FIG. 4 are defined in the active area 51 that are viewable with the viewer's left eye when image light transmitted through the transmissive portions 62 in the parallax barrier 6 reaches the viewer's left eye. Left unviewable sections 51bL are unviewable with the viewer's left eye when image light is blocked by the light-blocking portions 61 in the parallax barrier 6. The left viewable sections 51aL include a half of the subpixels P1, all of the subpixels P2 to P6, and a half of the subpixels P7.

The right viewable sections 51aR in FIG. 5 are defined in the active area 51, and are viewable with the viewer's right eye when image light from other subpixels transmitted through the transmissive portions 62 in the parallax barrier 6 reaches the viewer's right eye. Right unviewable sections 51bR are unviewable with the viewer's right eye when image light is blocked by the light-blocking portions 61 in the parallax barrier 6. The right viewable sections 51aR include a half of the subpixels P7, all of the subpixels P8 to P12, and a half of the subpixels P1.

The left-eye image displayed by the subpixels P1 to P6 are viewable with the left eye. The right-eye image displayed by the subpixels P7 to P12 are viewable with the right eye. The right-eye image and the left-eye image have parallax between them and are included in a parallax image. More specifically, the left eye views a half of the left-eye image displayed by the subpixels P1, all the left-eye images displayed by the subpixels P2 to P6, and a half of the right-eye image displayed by the subpixels P7. The right eye views a half of the right-eye image displayed by the subpixels P7, all the right-eye images displayed by the subpixels P8 to P12, and a half of the left-eye image displayed by the subpixels P1. In FIGs. 4 and 5, subpixels to show the left-eye image are each given reference sign L, and subpixels to show the right-eye image are each given reference sign R.

In this state, the left eye of the viewer views the largest area of the left-eye image, and the smallest area of the right-eye image. The right eye of the viewer views the largest area of the right-eye image, and the smallest area of the left-eye image. Thus, the viewer can view a 3D image with least crosstalk.

In the 3D display device 2 with the structure described above, the viewer with the interocular distance E being the reference distance E0 can appropriately view a 3D image when the left-eye image is displayed by subpixels included in the left viewable sections 51aL, and the right-eye image having parallax with the left-eye image is displayed by subpixels included in the right viewable sections 51aR. In the structure described above, the left-eye image is displayed by subpixels with at least its half being viewable with the left eye, and the right-eye image is displayed by subpixels with at least its half being viewable with the right eye. In some embodiments, subpixels to display the left-eye image or the right-eye image may be determined as appropriate to minimize crosstalk based on the left viewable sections 51aL and the right viewable sections 51aR in accordance with the design of, for example, the active area 51 and the parallax barrier 6. In accordance with the aperture ratio or other factors of the parallax barrier 6, for example, the left-eye image may be displayed by subpixels with at least a predetermined proportion being viewable with the left eye, and the right-eye image may be displayed by subpixels with at least a predetermined proportion being viewable with the right eye.

Structure of Controller

The controller 7 may be connected to the components of the 3D display system 100 to control these components. The components controlled by the controller 7 include the detector 1 and the display panel 5. The controller 7 may be, for example, a processor. The controller 7 may include one or more processors. The processors may include a general-purpose processor that reads a specific program and performs a specific function, and a processor dedicated to specific processing. The dedicated processor may include an application-specific integrated circuit (ASIC). The processors may include a programmable logic device (PLD). The PLD may include a field-programmable gate array (FPGA). The controller 7 may be either a system on a chip (SoC) or a system in a package (SiP) in which one or more processors cooperate with other components. The controller 7 may include a storage, and store various items of information or programs to operate each component of the 3D display system 100 into the storage. The storage may be, for example, a semiconductor memory. The storage may function as a work memory for the controller 7.

The memory 8 includes any storage such as a random-access memory (RAM) or a read-only memory (ROM). The memory 8 stores one or more of a first table and a second table, which will be described in detail later.

Interocular Distance Other Than Reference Distance

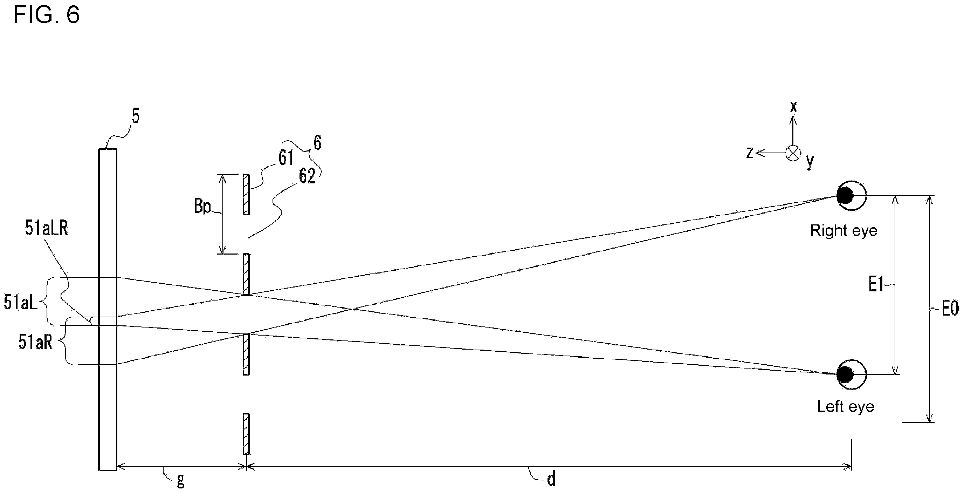

As illustrated in FIG. 6, with the interocular distance E of the viewer being an interocular distance E1 different from the reference distance E0, a part of the left viewable sections 51aL and a part of the right viewable sections 51aR may overlap each other to define a binocular viewable section 51aLR. Thus, some subpixels are left subpixels (first subpixels) determined to display the left-eye image based on the left viewable sections 51aL, and are also right subpixels (second subpixels) determined to display the right-eye image based on the right viewable sections 51aR. The left subpixels each are, for example, a subpixel with at least a predetermined proportion (e.g., a half) being in the left viewable sections 51aL. The right subpixels are each a subpixel with, for example, at least a predetermined proportion being in the right viewable sections 51aR.

In this structure, with the right-eye image displayed by subpixels that are left subpixels and also right pixels, the number of right-eye images viewable with the left eye increases. With the left-eye image displayed by subpixels that are left subpixels and also right pixels, the number of left-eye images viewable with the right eye increases. Thus, when either the left-eye image or the right-eye image is displayed by the overlapping subpixels, crosstalk can increase. The controller 7 performs control to reduce crosstalk that may occur when the viewer with the interocular distance E1 views the 3D display device 2 formed based on the reference distance E0. The controller 7 will now be described in detail.

Determination of Third Subpixels

The controller 7 determines third subpixels based on the positions of the eyes of the viewer in the horizontal direction. The third subpixels each are left subpixels with at least a predetermined proportion being in the left viewable sections 51aL, and also right subpixels with at least a predetermined proportion being in the right viewable sections 51aR. Example methods for determining the third subpixels will now be described.

First Example

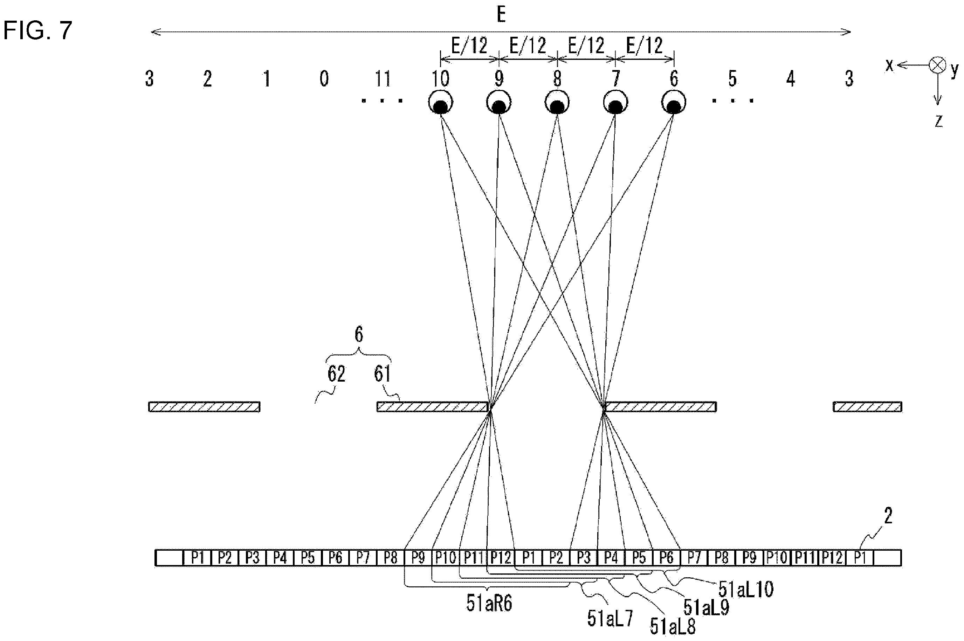

When the detector 1 detects the position of the left eye, the controller 7 may perform calculation based on the position of the left eye, the gap g, the optimum viewing distance d, and the positions of the transmissive portions 62 to determine the left viewable sections 51aL.
For example, with the left eye at the position 6 as illustrated in FIG. 7, the controller 7 performs calculation based on the gap g, the optimum viewing distance d, and the position of the transmissive portion 62 to determine the left viewable section 51aL to be a left viewable section 51aL6. The controller 7 determines left subpixels with at least a predetermined proportion being in the left viewable section 51aL6. In the example illustrated in FIG. 7, the controller 7 may determine the subpixels P9 to P12, P1, and P2 in the left viewable sections 51aL to be the left subpixels. Based on the left viewable sections 51aL, the controller 7 may use any method to determine the left subpixels that display a maximum left-eye image viewable with the left eye.
With the left eye at the position 7, the controller 7 performs calculation based on the gap g, the optimum viewing distance d, and the position of the transmissive portion 62 to determine the left viewable section 51aL to be a left viewable section 5 1aL7. The controller 7 determines left subpixels with at least a predetermined proportion being in the left viewable section 51aL7. In the example illustrated in FIG. 7, the controller 7 may determine the subpixels P10 to P12 and P1 to P3 to be the left subpixels.
As described above, the barrier pitch Bp, the gap g, and the optimum viewing distance d are predefined with the interocular distance E being the reference distance E0 to eliminate an overlap of the left viewable sections 51aL and the right viewable sections 51aR. In the 3D display device with the structure that forms the basis of the present disclosure, the controller 7 thus obtains, for example, the position of the left eye alone, determines left viewable sections 51aL based on the position of the left eye, and determines an area excluding the left viewable sections 51aL to be the right viewable sections 51aR. In the present embodiment, the controller 7 performs calculation based on the position of the right eye of the viewer detected by the detector 1, the position of the barrier aperture area, the gap g, and the optimum viewing distance d to determine the right viewable sections 51aR. Based on the right viewable sections 51aR, the controller 7 may determine right subpixels to display the right-eye image. The controller 7 determines right subpixels based on the right viewable sections 51aR in the same manner as for the controller 7 determining left subpixels based on the left viewable sections 51aL.

After determining the left subpixels and the right subpixels, the controller 7 determines the third subpixels that are the left subpixels and are also the right subpixels.

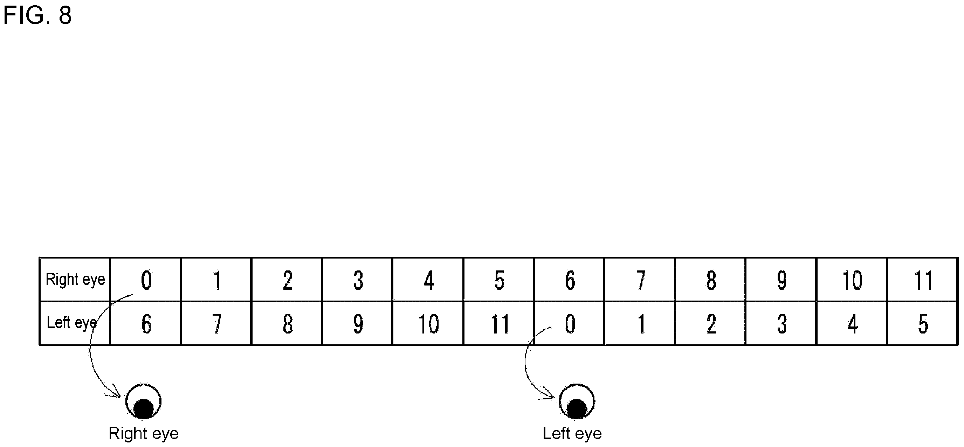

The controller 7 may use the first table prestored in the memory 8 to determine the third subpixels. In the present embodiment, the positions of the right eye and the left eye in the horizontal direction are identified using pieces of information 0 to 11 as illustrated in FIG. 8. With the interocular distance being the reference distance, information identifying the position of the right eye is the same as information identifying the position of the left eye.

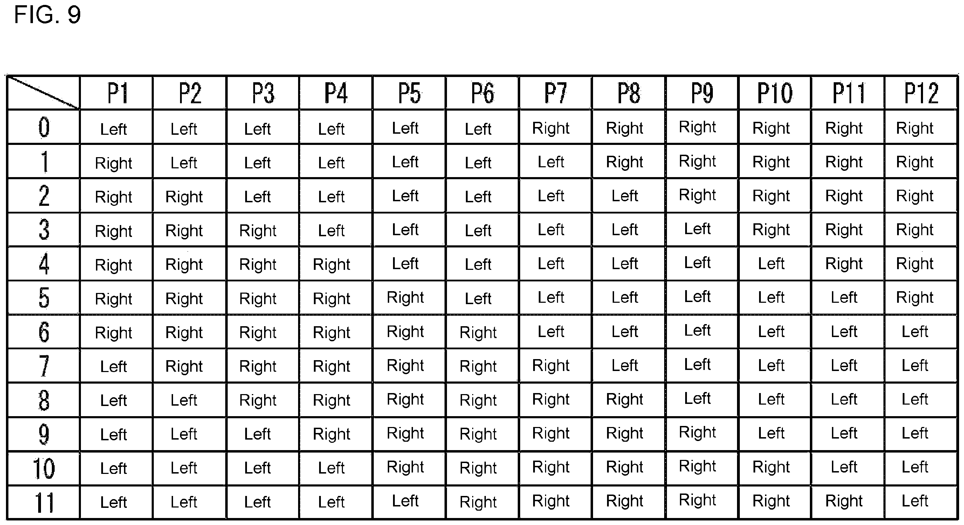

As illustrated in FIG. 9, the first table stores the positions of the left eye and the right eye with the interocular distance E being the reference distance E0, the corresponding left subpixels with at least a predetermined proportion being in the left viewable sections 51aL, and the corresponding right subpixels with at least a predetermined proportion being in the right viewable sections 51aR. The example illustrated in FIG. 9 includes the pieces of information 0 to 11 for identifying the positions of the eyes in the column direction, and the pieces of information P1 to P12 for identifying subpixels in the row direction. The first table shows that, for the eyes at each position, the corresponding subpixel is a left subpixel or a right subpixel. In FIG. 9, Left refers to a left subpixel, and Right refers to a right subpixel. As described with reference to FIG. 8, when the left eye is at the position 0 with the interocular distance being the reference distance, the right eye is at the position 0. In this case, the subpixels P1 to P6 are left subpixels, and the subpixels P7 to P12 are right subpixels in the example illustrated in FIG. 9. When the left eye is at the position 1, the right eye is at the position 1. In this case, the subpixels P2 to P7 are left subpixels, and the subpixels P1 and P8 to P12 are right subpixels.

For an image displayed in accordance with the first table in FIG. 9 based on the position of the right eye without the interocular distance E being the reference distance E0, the subpixels to display the left-eye image to the left eye display the right image. More specifically, when the left eye is at the position 11 and the right eye is at the position 0, the controller 7 causes the subpixels P1 to P6 to display the left-eye image based on the position 0 of the right eye and causes the subpixels P7 to P12 to display the right-eye image. As shown in the first table, the subpixels P1 to P5 and P12 are to display the left-eye image based on the position 11 of the left eye. Thus, when the subpixels display images based on the position of the right eye, the viewer views the right-eye image displayed by the subpixel P12. This increases the number of right-eye images viewable with the left eye and increases crosstalk.

The controller 7 determines the third subpixels to be subpixels that are right subpixels with at least a predetermined proportion being in the right viewable sections 51aR determined based on the position of the right eye, and are also left subpixels with at least a predetermined proportion being in the left viewable sections 51aL determined based on the position of the left eye.

For example, when the detector 1 detects the right eye at the position 0, the controller 7 uses the first table to determine the subpixels P7 to P12 to be right subpixels based on the position 0 of the right eye. When the detector 1 detects the left eye at the position 11, the controller 7 uses the first table to determine the subpixels P1 to P5 and P12 to be left subpixels based on the position of the left eye. Thus, the controller 7 determines the third subpixel to be the subpixel P12.

The controller 7 may use the second table to determine the third subpixels. The second table (not shown) prestored in the memory 8 shows the position of the right eye and the position of the left eye and the corresponding third subpixels.

As described above, the left viewable sections 51aL and the right viewable sections 51aR may be determined based on the position of the left eye and the position of the right eye. The left subpixels may be determined based on the left viewable sections 51aL, and the right subpixels may be determined based on the right viewable sections 51aR.

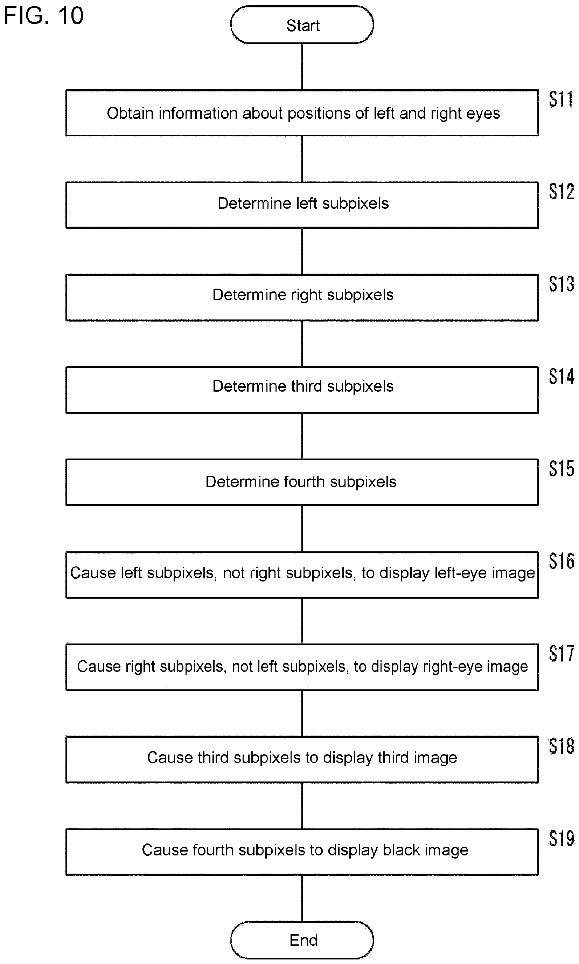

An example process performed by the 3D display device 2 without the interocular distance E being the reference distance E0 will now be described with reference to FIG. 10.

FIG. 10 is a flowchart of example processing by the 3D display device without the interocular distance being the reference distance. The controller 7 obtains information about the positions of the left eye and the right eye of the user from the detector 1 (step S11).

In response to obtaining the information about the position of the left eye in step S11, the controller 7 determines the left viewable sections 51aL based on the position of the left eye, and determines the left subpixels based on the left viewable sections 51aL (step S12).

In response to determining the left viewable sections 51aL in step S12, the controller 7 determines the right viewable sections 51aR based on the position of the right eye in the information obtained in step S11, and determines the right subpixels based on the right viewable sections 51aR (step S13).

In response to determining the left subpixels in step S12 and the right subpixels in step S13, the controller 7 determines the third subpixels based on the left subpixels and the right subpixels (step S14). The controller 7 may determine the third subpixels based on the information about the positions of the right eye and the left eye obtained in step S 11.

In response to determining the third subpixels in step S14, the controller 7 determines fourth subpixels based on the left subpixels and the right subpixels (step S15). The controller 7 may determine the fourth subpixels based on the information about the positions of the right eye and the left eye obtained in step S 11.

In response to determining the fourth subpixels in step S15, the controller 7 causes subpixels that are left subpixels and are not right subpixels to display the left-eye image (step S16).

In response to the left-eye image displayed in step S16, the controller 7 causes subpixels that are right subpixels and are not left subpixels to display the right-eye image (step S17).

In response to the right-eye image displayed in step S17, the controller 7 causes the third subpixels to display the third image (step S18).

In response to the third image displayed by the third subpixels in step S18, the controller 7 causes the fourth subpixels to display a black image (step S19).

Image Divided Eye Tracking

The screen switching position for eye tracking (gaze measurement) is adjusted based on the position of and depth information about an icon. Examples of an icon may include vehicle speed indications, shift positions, temperatures inside the vehicle, illumination of a lamp, directional instructions, and various warnings. The screen is divided vertically into multiple areas. The origins of the switching positions are then obtained. For example, the number of divided areas is determined based on images obtained with a moving camera capturing the display area and the content displayed most frequently on a home screen. The determination is performed as to whether an icon is displayed in each area. With an icon displayed in a single area, eye tracking is performed based on the origin of the area. With icons displayed in multiple areas, eye tracking is performed based on the origin of an area including an icon located at a maximum depth position after pieces of depth information of the icons are compared. With a single icon located over multiple areas, eye tracking is performed based on an average value of the origins of the target areas. When a black display area with a specific width is located along the entire boundary of each area, eye tracking is performed independently based on the origin of each area.

The controller 7 determines the left viewable sections 51aL based on the position of the left eye, and determines the right viewable sections 51aR based on the position of the right eye. The left viewable sections 51aL are determined based on the position of the left eye, instead of being based on the position of the right eye and the reference distance E0. The right viewable sections 51aR are determined based on the position of the right eye, instead of being based on the position of the left eye and the reference distance E0. Thus, without the interocular distance E being the reference distance E0, areas viewable with the right eye and areas viewable with the left eye are determined accurately.

The controller 7 determines the left subpixels based on the left viewable sections 51aL and the right subpixels based on the right viewable sections 51aR. The controller 7 causes subpixels that are the left subpixels and are not the right subpixels to display the left-eye image. The controller 7 causes subpixels that are the right subpixels and are not the left subpixels to display the right-eye image. The controller 7 may cause the third subpixels to display the third image. Without the interocular distance being the reference distance, an image viewable with the eyes of the viewer is controlled to reduce crosstalk. This allows the viewer to appropriately view 3D images.

Switching of Display Areas with Reference Index

As described above, the controller 7 causes the display panel 5 to display a composite image. The display panel 5 includes multiple display areas in the active area 51. Each of the multiple display areas corresponds to one of multiple reference indexes. The controller 7 generates a composite image to be displayed on a display area with respect to the reference index corresponding to the display area.

The left-eye image and the right-eye image in a parallax image can be switched with respect to a fixed single coordinate with a known technique. However, a windshield, which is one reflector of image light, is curved freely into an arc to reduce air resistance as viewed from above in the vertical direction. A head-up display (HUD), which is described later, located adjacent to the driver seat has different curvatures in its right and left portions and in its upper and lower portions. The HUD thus includes an uneven surface. Optically, the curvature varies greatly both laterally and vertically due to the manufacturing processes or individual differences. Although a concave mirror located between the 3D display device 2 and the eyes of the viewer corrects a certain level of distortion, the viewer still views an image with distortion. This also affects separation of the parallax image.

The present embodiment focuses on independent switching of the parallax image in units of multiple areas of the screen, rather than such switching being performed for the entire screen. A different display area has its origin at a different position. In other words, a different display area using the same origin causes a different display area to use a different index as a reference. A change from such a different origin for each display area to the same single origin for each display area changes the index for each area, whereas the use of the index with the single origin as a reference allows each display area to use the same origin. In detail, the screen is divided into multiple display areas each with a different reference index, which is then used as a reference in changing the parallax image, or the screen is divided into multiple display areas each with a different origin for switching, which is then used for switching based on a deviation from the origin.

For example, the active area 51 includes a first display area and a second display area. The first display area may correspond to a first reference index. The second display area may correspond to a second reference index. A single reference index may correspond to multiple display areas. For example, the first reference index may correspond to the first display area and the second display area. In other words, each of the multiple reference indexes corresponds to one or more display areas.

The reference index is, more specifically, the positions of the eyes illustrated in FIG. 9. The reference index as a reference is 0. In the example in FIG. 9, twelve indexes including 0 to 11, and 6 to 11 and 0 to 5 are set for each of the first display area and the second display area. With the left eye being L and the right eye being R, for example, a composite image is generated with a combination such as LLLRRRRRRLL. In the present embodiment, the reference index is changed for each display area. An independent reference index is set for each display area. For example, the reference index is set at 0 for a first display area F1, and at 6 for a second display area F2. A shift in the positions of the eyes is detected as a change in the reference index. For example, a shift by three subpixels in the position of the left eye is +3, and a shift by six subpixels in the position of the right eye is +6. With the shift of +3, the reference index F1 for the first display area is changed from 0 to 3, and the reference index F2 for the second display area is changed from 6 to 9. When a shift in the position of the left eye is +6, the reference index F1 for the first display area is changed from 0 to 6, and the reference index F2 for the second display area is changed from 6 to 0 (cycling to 0 as the duodecimal system is used). A composite image is to be LLLR:RRRRRLL for the reference index 0, RRRRRRLLLLLL for the reference index of 3, and RRRLLLLLLRRR for the reference index of 6.

In the present embodiment, the 3D display device 2 includes the display panel 5 that displays a composite image including the first image and the second image having parallax with respect to the first image, the optical element that defines a traveling direction of image light emitted from the display panel 5, the position obtainer 3 that obtains the position of the first eye of the viewer and the position of the second eye different from the first eye, and the controller that causes the display panel 5 to display the composite image with an arrangement of the first image and the second image changed based on the positions of the first eye and the second eye. The controller may generate a composite image for each of multiple display areas divided in the active area 51 of the display panel 5 by changing an arrangement of the first image and the second image based on one of multiple reference indexes and at least one of the position of the first eye or the position of the second eye, and may cause the display panel 5 to display the generated composite image. The multiple reference indexes may each correspond to one of the multiple display areas.

The 3D display device 2 includes the display panel 5 that displays the composite image including the first image and the second image having parallax with respect to the first image, the optical element that defines the traveling direction of image light emitted from the display panel 5, the position obtainer 3 that obtains the position of the first eye of the viewer and the position of the second eye different from the first eye, and the controller that causes the display panel 5 to display the composite image based on the positions of the first eye and the second eye obtained by the position obtainer 3. The controller may generate a composite image for each of multiple display areas divided in the active area 51 of the display panel 5 by changing an arrangement of the first image and the second image with respect to one of multiple switching origins, and may cause the display panel 5 to display the generated composite image. The multiple switching origins may each correspond to one of the multiple display areas.

The controller 7 may determine the first viewable sections based on the position of the first eye obtained by the position obtainer 3 and may determine the second viewable sections based on the position of the second eye obtained by the position obtainer 3.

The controller 7 may determine the first viewable sections based on the position of the first eye in the vertical direction parallel to the screen of the display panel 5, and may determine the second viewable sections based on the position of the second eye in the vertical direction.

The position obtainer 3 may obtain a projected first position being a position of the viewer's first eye projected on a surface that is parallel to the display panel 5 and is located at the optimum viewing distance from the optical element as the position of the first eye, and may obtain a projected second position being a position of the viewer's second eye projected on the screen as the position of the second eye.

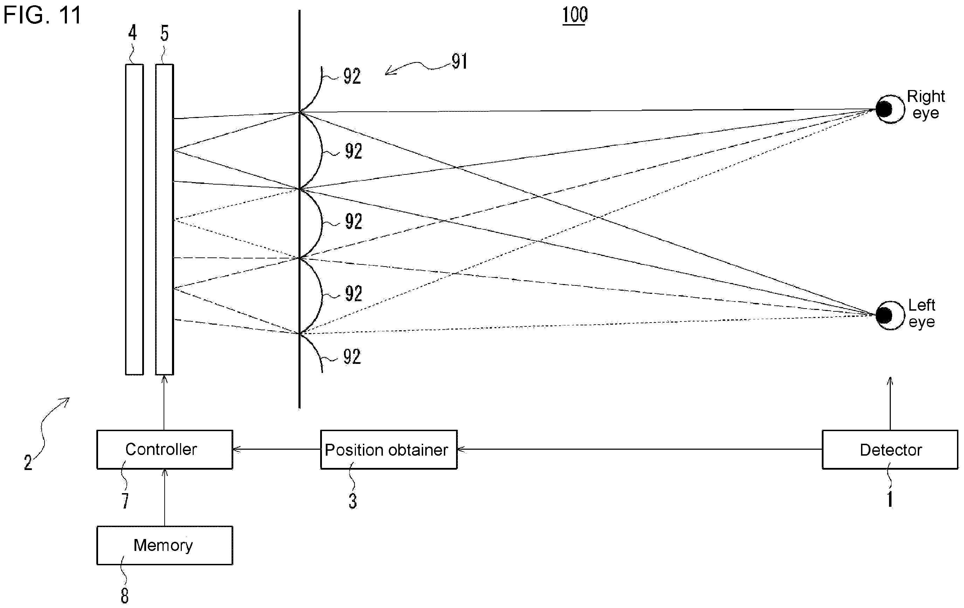

An example process performed by the 3D display device 2 without the interocular distance E being the reference distance E0 will now be described with reference to FIG. 11.

The controller 7 obtains information about the positions of the left eye and the right eye of the viewer from the detector 1 (step S11).

In response to obtaining the information about the position of the left eye in step S11, the controller 7 determines the left viewable sections 51aL based on the position of the left eye, and determines the left subpixels based on the left viewable sections 51aL (step S12).

In response to determining the left viewable sections 51aL in step S12, the controller 7 determines the right viewable sections 51aR based on the position of the right eye in the information obtained in step S11, and determines the right subpixels based on the right viewable sections 51aR (step S13).

In response to determining the left subpixels in step S12 and the right subpixels in step S13, the controller 7 determines the third subpixels based on the left subpixels and the right subpixels (step S14). The controller 7 may determine the third subpixels based on the information about the positions of the right eye and the left eye obtained in step S11.

In response to determining the third subpixels in step S14, the controller 7 determines the fourth subpixels based on the left subpixels and the right subpixels (step S15). The controller 7 may determine the fourth subpixels based on the information about the positions of the right eye and the left eye obtained in step S11.

In response to determining the fourth subpixels in step S15, the controller 7 causes subpixels that are left subpixels and are not right subpixels to display the left-eye image, with the reference index (corresponding to a subpixel ) $P_A$ as the origin (step S16).

In response to the left-eye image displayed in step S16, the controller 7 causes subpixels that are right subpixels and are not left subpixels to display the right-eye image, with the reference index $P_B$ as the origin (step S17).

In response to the right-eye image displayed in step S17, the controller 7 causes the third subpixels to display the third image, with the reference index Pc as the origin (step S18).

In response to the third image displayed by the third subpixels in step S18, the controller 7 causes the fourth subpixels to display a black image, with the reference index $P_D$ as the origin (step S19).

Although image light is projected on a surface that is a freely curved surface such as a windshield being one of reflectors, the 3D display device 2 according to the present embodiment allows the viewer to view an appropriate 3D image without distortion by displaying a parallax image corrected in accordance with the curved surface on each of the multiple display areas with the reference index being the origin.

In the present embodiment, the controller 7 can use the first table to determine the left subpixels based on the position of the left eye. The first table shows the position of the left eye and the position of the right eye at the reference distance away from the left eye, and the corresponding images to be displayed by the subpixels. The controller 7 can use the first table to determine the right subpixels based on the position of the right eye. Thus, the controller 7 can eliminate calculation of the left viewable sections 51aL and the right viewable sections 51aR performed repeatedly when the information about the positions of the eyes is obtained based on the positions of the eyes and the structures of the parallax barrier 6 and the display panel 5. This may reduce the processing load of the controller 7.

In the present embodiment, the controller 7 can cause, based on the characteristics of the viewer, either the left-eye image or the right-eye image to be displayed as the third image on the binocular viewable sections 51aLR. This can reduce discomfort of the viewer with, for example, the dominant eye of the viewer viewing an image corresponding to the dominant eye alone.

In the present embodiment, the controller 7 can display an image having an average luminance value of the left-eye image and the right-eye image as the third image. Thus, the left eye of the viewer views the image having a luminance level closer to the luminance level of the left-eye image than the luminance level of the right-eye image. The right eye of the viewer views the image having a luminance level closer to the luminance level of the right-eye image than the luminance level of the left-eye image. This allows the viewer to view a less uncomfortable image than the right-eye image viewed with the left eye or than the left-eye image viewed with the right eye.

In the present embodiment, the controller 7 can cause a black image with the luminance value less than a predetermined luminance value to be displayed as the third image. This can prevent the left eye of the viewer from viewing an image for the right eye and prevent the right eye of the viewer from viewing an image for the left eye. This reduces crosstalk and allows the viewer to view a 3D image without distortion.

In the present embodiment, the 3D display device 2 can include the memory 8 storing the second table showing the position of the left eye, the position of the right eye, and the corresponding third subpixels. The controller 7 can use the second table to determine the third subpixels based on the position of the left eye and the position of the right eye. Thus, the controller 7 can eliminate calculation of the left viewable sections 51aL and the right viewable sections 51aR performed repeatedly when the information about the positions of the eyes is obtained based on the positions of the eyes and the structures of the parallax barrier 6 and the display panel 5. The controller 7 can eliminate determination of the left subpixels based on the left viewable sections 51aL and of the right subpixels based on the right viewable sections 51aR. This may reduce the processing load of the controller 7.

In the present embodiment, the controller 7 causes the fourth subpixels to display a black image. Thus, the fourth subpixels do not emit any image light. Thus, stray light, which is generated by image light from the fourth subpixel and secondarily reflected by, for example, components of the parallax barrier 6, is less likely to reach the eyes of the viewer. This allows the left eye of the viewer to clearly view the left-eye image and the right eye of the viewer to clearly view the right-eye image without interference caused by stray light.

In the present embodiment, the controller 7 determines left subpixels based on the horizontal and vertical positions of the left eye. The controller 7 determines right subpixels based on the horizontal and vertical positions of the right eye. This reduces crosstalk with the interocular direction not being horizontal, although the controller 7 causes a 3D image to be displayed using the parallax barrier 6 and the display panel 5 having the interocular direction being horizontal.

In the present embodiment, the controller 7 determines left subpixels based on the projected left eye position. The controller 7 determines right subpixels based on the projected right eye position. This reduces crosstalk with the interocular distance E having horizontal component other than the reference distance E0, although the controller 7 causes a 3D image to be displayed using the parallax barrier 6 and the display panel 5 based on the reference distance E0.

In another embodiment, a 3D display device 2 includes a display panel 5 that displays a composite image including a right-eye image (first image) and a left-eye image (second image) having parallax with respect to the right-eye image, an optical element that defines a traveling direction of image light emitted from the display panel 5, a position obtainer that obtains a position of the first eye of the viewer and a position of the second eye different from the first eye, and a controller 7 that causes the display panel 5 to display a composite image based on the positions of the first eye and the second eye. The controller 7 may divide the screen of the display panel 5 into multiple areas each having a specific origin for switching, switch the areas based on a deviation from the switching origin, and cause the display panel 5 to display an image of the area.

Although the above embodiments are described as typical examples, various variations and substitutions to the embodiments are apparent to those skilled in the art without departing from the spirit and scope of the present disclosure. Thus, the above embodiments should not be construed to be restrictive, but may be variously changed or altered within the scope of the present disclosure. For example, multiple structural blocks described in the above embodiments or examples may be combined into a single structural block, or each structural block may be divided.

The controller 7 is not limited to determine right subpixels after determining left subpixels as in the above embodiments. The controller 7 may determine left subpixels after determining right subpixels.

In the above embodiments, the controller 7 causes the left-eye image, the right-eye image, the third image, and the black image to be displayed in this order. However, another embodiment of the present embodiment is not limited to use this order, and may cause the left-eye image, the right-eye image, the third image, and the black image to be displayed in any order. The controller 7 may also cause two or more of the left-eye image, the right-eye image, the third image, and the black image to be displayed simultaneously.

Although the controller 7 determines fourth subpixels based on the left viewable sections 51aL and the right viewable sections 51aR and causes the fourth subpixels to display the black image in the above embodiments, the controller 7 may operate differently. For example, the controller 7 may cause the left subpixels to display the left-eye image, the right subpixels to display the right-eye image, and the third subpixels to display the third image. The controller 7 may cause subpixels displaying none of these images to display the black image.

The optical element is not limited to the parallax barrier 6 as in the above embodiments. As illustrated in FIG. 11, the optical element included in the 3D display device 2 may be a lenticular lens 91. The lenticular lens 91 is a horizontal array of cylindrical lenses 92 each extending vertically. As with the parallax barrier 6, the lenticular lens 91 allows image light from the subpixels in the left viewable sections 5 1aL to reach the position of the left eye of the viewer. The lenticular lens 91 allows image light from the subpixels in the right viewable sections 51aR to reach the position of the right eye of the viewer.

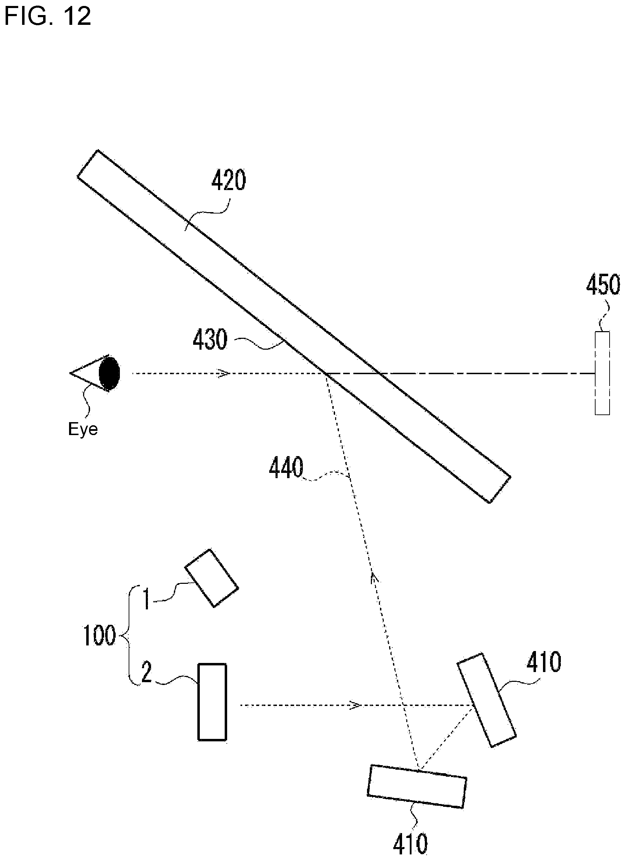

As illustrated in FIG. 12, the 3D display system 100 may be included in a head-up display system 400. The head-up display system 400 is also referred to as a HUD 400. The HUD 400 includes the 3D display system 100, an optical member 410, and a projection reception member 420 including a projection screen 430. The HUD 400 directs image light from the 3D display system 100 to reach the projection reception member 420 through the optical member 410. The HUD 400 directs image light reflected from the projection reception member 420 to reach the left eye and the right eye of the viewer. In other words, the HUD 400 directs the image light to travel from the 3D display system 100 to the viewer's left and right eyes along an optical path 440 indicated by a broken line. The viewer can thus view image light reaching the eyes along the optical path 440 as a virtual image 450.

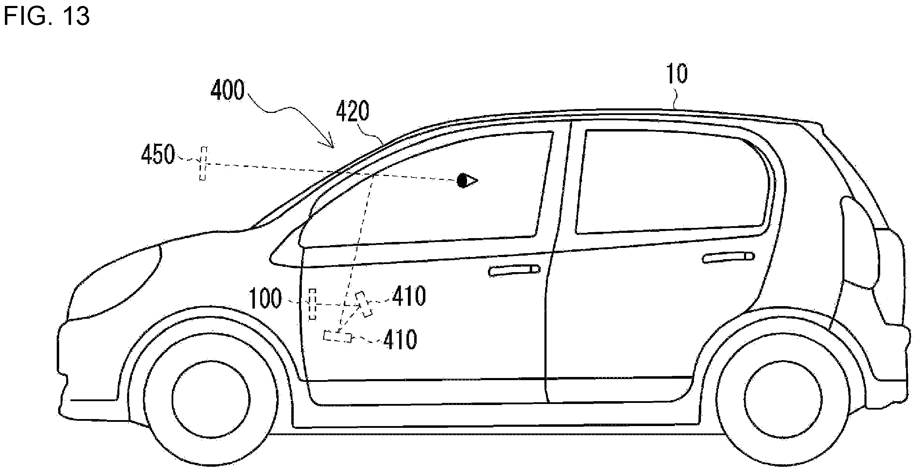

As illustrated in FIG. 13, the HUD 400 including the 3D display system 200 may be mounted on a movable body 10. The HUD 400 may include components that also serve as other devices or components included in the movable body 10. For example, the movable body 10 may use a windshield as the projection reception member 420. The devices or components of the movable body 10 serving as devices or components included in the HUD 400 may be referred to as HUD modules or 3D display components. The HUD 400 and the 3D display system 100 may be mounted on the movable body 10. The movable body according to one or more embodiments of the present disclosure includes a vehicle, a vessel, or an aircraft.

The present embodiment uses independent switching of the parallax image in units of multiple areas of the screen, rather than such switching being performed for the entire screen. A different area has its origin at a different position. In other words, a different display area using the same origin causes a different display area to use a different index as a reference. A change from such a different origin for each area to the single origin for each area changes the reference index, whereas the use of the reference index with the single origin as a reference allows each area to use the same origin.

The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an industrial vehicle for agriculture and an industrial vehicle for construction. The industrial vehicle includes, but is not limited to, a forklift or a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft.

The present disclosure may be implemented in the following forms.

In one or more embodiments of the present disclosure, a three-dimensional display device includes a display panel to display a composite image including a first image and a second image having parallax with respect to the first image, an optical element that defines a traveling direction of image light emitted from the display panel, a position obtainer that obtains a position of a first eye of a viewer and a position of a second eye of the viewer different from the first eye, and a controller that causes the display panel to display the composite image with an arrangement of the first image and the second image changed based on the position of the first eye and the position of the second eye. The controller generates the composite image for each of a plurality of display areas divided in an active area of the display panel by changing an arrangement of the first image and the second image based on one of a plurality of reference indexes and at least one of the position of the first eye or the position of the second eye. The controller causes the display panel to display the generated composite image. The plurality of reference indexes each correspond to one of the plurality of display areas.

In one or more embodiments of the present disclosure, a three-dimensional display device includes a display panel to display a composite image including a first image and a second image having parallax with respect to the first image, an optical element that defines a traveling direction of image light emitted from the display panel, a position obtainer that obtains a position of a first eye of a viewer and a position of a second eye of the viewer different from the first eye, and a controller that causes the display panel to display the composite image based on the position of the first eye and the position of the second eye obtained by the position obtainer. The controller generates the composite image for each of a plurality of display areas divided in an active area of the display panel by changing an arrangement of the first image and the second image with respect to one of a plurality of switching origins. The controller causes the display panel to display the generated composite image. The plurality of switching origins each correspond to one of the plurality of display areas.

Although image light is projected on a surface that is a freely curved surface such as a windshield being one of reflectors, the 3D display device according to one or more embodiments of the present disclosure allows the viewer to view an appropriate 3D image without distortion by displaying a parallax image corrected in accordance with the curved surface on each of the multiple display areas with the reference index being the origin.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

REFERENCE SIGNS

| 1 | detector |
| 2 | three-dimensional (3D) display device |
| 3 | position obtainer |
| 4 | illuminator |
| 5 | display panel |
| 6 | parallax barrier |
| 7 | controller |
| 8 | memory |
| 10 | movable body |
| 51 | active area |
| 51aL | left viewable section |
| 51aR | right viewable section |
| 51bL | left unviewable section |
| 5 1bR | right unviewable section |
| 51aLR | binocular viewable section |
| 51bLR | binocular unviewable section |
| 60 | parallax barrier |
| 61 | light-blocking portion |
| 62 | transmissive portion |
| 91 | lenticular lens |
| 92 | cylindrical lens |
| 100 | three-dimensional (3D) display system |
| 400 | head-up display system |
| 410 | optical member |
| 420 | projection reception member |
| 430 | projection screen |
| 440 | optical path |
| 450 | virtual image |

## Claims

1. A three-dimensional display device, comprising:

   a display panel including an active area, the display panel being configured to display a composite image in the active area, the composite image including a first image and a second image having parallax with respect to the first image;

   an optical element configured to define a traveling direction of image light emitted from the display panel;

   a position obtainer configured to obtain a first position being a position of a first eye of a viewer and a second position being a position of a second eye of the viewer different from the first eye; and

   a controller configured to cause the display panel to display the composite image with an arrangement of the first image and the second image changed based on at least one of the first position or the second position,

   wherein the active area includes a plurality of display areas,

   the controller generates the composite image for each of the plurality of display areas by changing an arrangement of the first image and the second image based on one of a plurality of reference indexes corresponding to the plurality of display areas and at least one of the first position or the second position, and

   the controller causes the display panel to display the generated composite image.

2. A three-dimensional display device, comprising:

   a display panel including an active area, the display panel being configured to display a composite image in the active area, the composite image including a first image and a second image having parallax with respect to the first image;

   an optical element configured to define a traveling direction of image light emitted from the display panel;

   a position obtainer configured to obtain a first position being a position of a first eye of a viewer and a second position being a position of a second eye of the viewer different from the first eye; and

   a controller configured to cause the display panel to display the composite image based on the first position and the second position obtained by the position obtainer,

   wherein the active area includes a plurality of display areas,

   the controller generates the composite image for each of the plurality of display areas by changing an arrangement of the first image and the second image with respect to one of a plurality of switching origins corresponding to the plurality of display areas, and

   the controller causes the display panel to display the generated composite image.

3. The three-dimensional display device according to claim 1 or claim 2, wherein

   the controller determines a first viewable section based on the first position obtained by the position obtainer, and

   the controller determines a second viewable section based on the second position obtained by the position obtainer.

4. The three-dimensional display device according to any one of claims 1 to 3, wherein the controller determines a first viewable section based on the first position in a vertical direction parallel to a screen of the display panel, and

   the controller determines a second viewable section based on the second position in the vertical direction.

5. The three-dimensional display device according to any one of claims 1 to 4, wherein

   the position obtainer obtains a first projected position being a position of the first eye projected onto a surface parallel to a screen of the display panel as the first position, and the surface is located at an optimum viewing distance from the optical element, and

   the position obtainer obtains a second projected position being a position of the second eye projected onto the surface as the second position.

FIG. 1

EP 4 184 238 A1

EP 4 184 238 A1

**FIG. 2**

FIG. 3

FIG. 4

| P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R | P12 R |
|---|---|---|---|---|---|---|---|---|---|---|---|---|---|---|---|---|---|---|---|---|---|---|---|
| P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R |
| P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R |
| P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R |
| P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R |
| P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R |
| P1 L | P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L |

| 51bL (51aR) | 51aL (51bR) | 51bL (51aR) | 51aL (51bR) |
|---|---|---|---|

FIG. 5

| P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R | P12 R |
|---|---|---|---|---|---|---|---|---|---|---|---|---|---|---|---|---|---|---|---|---|---|---|---|
| P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R |
| P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R |
| P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R |
| P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R |
| P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R |
| P1 L | P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L |

51aR (51bL)     51bR (51aL)     51aR (51bL)     51bR (51aL)

EP 4 184 238 A1

FIG. 6

FIG. 7

EP 4 184 238 A1

FIG. 8

| Right eye | 0 | 1 | 2 | 3 | 4 | 5 | 6 | 7 | 8 | 9 | 10 | 11 |
|-----------|---|---|---|---|----|----|---|---|---|---|----|----|
| Left eye | 6 | 7 | 8 | 9 | 10 | 11 | 0 | 1 | 2 | 3 | 4 | 5 |

Right eye

Left eye

FIG. 9

| | P1 | P2 | P3 | P4 | P5 | P6 | P7 | P8 | P9 | P10 | P11 | P12 |
|---|---|---|---|---|---|---|---|---|---|---|---|---|
| 0 | Left | Left | Left | Left | Left | Left | Right | Right | Right | Right | Right | Right |
| 1 | Right | Left | Left | Left | Left | Left | Left | Right | Right | Right | Right | Right |
| 2 | Right | Right | Left | Left | Left | Left | Left | Left | Right | Right | Right | Right |
| 3 | Right | Right | Right | Left | Left | Left | Left | Left | Left | Right | Right | Right |
| 4 | Right | Right | Right | Right | Left | Left | Left | Left | Left | Left | Right | Right |
| 5 | Right | Right | Right | Right | Right | Left | Left | Left | Left | Left | Left | Right |
| 6 | Right | Right | Right | Right | Right | Right | Left | Left | Left | Left | Left | Left |
| 7 | Left | Right | Right | Right | Right | Right | Right | Left | Left | Left | Left | Left |
| 8 | Left | Left | Right | Right | Right | Right | Right | Right | Left | Left | Left | Left |
| 9 | Left | Left | Left | Right | Right | Right | Right | Right | Right | Left | Left | Left |
| 10 | Left | Left | Left | Left | Right | Right | Right | Right | Right | Right | Left | Left |
| 11 | Left | Left | Left | Left | Left | Right | Right | Right | Right | Right | Right | Left |

EP 4 184 238 A1

FIG. 10

```
                        ┌─────────────┐
                        │    Start    │
                        └──────┬──────┘
                               │
   ┌───────────────────────────────────────────────────────┐   S11
   │  Obtain information about positions of left and right   │
   │                        eyes                             │
   └───────────────────────────────────────────────────────┘
                               │
   ┌───────────────────────────────────────────────────────┐   S12
   │             Determine left subpixels                    │
   └───────────────────────────────────────────────────────┘
                               │
   ┌───────────────────────────────────────────────────────┐   S13
   │             Determine right subpixels                   │
   └───────────────────────────────────────────────────────┘
                               │
   ┌───────────────────────────────────────────────────────┐   S14
   │             Determine third subpixels                   │
   └───────────────────────────────────────────────────────┘
                               │
   ┌───────────────────────────────────────────────────────┐   S15
   │             Determine fourth subpixels                  │
   └───────────────────────────────────────────────────────┘
                               │
   ┌───────────────────────────────────────────────────────┐   S16
   │  Cause left subpixels, not right subpixels, to display  │
   │                  left-eye image                         │
   └───────────────────────────────────────────────────────┘
                               │
   ┌───────────────────────────────────────────────────────┐   S17
   │  Cause right subpixels, not left subpixels, to display  │
   │                  right-eye image                        │
   └───────────────────────────────────────────────────────┘
                               │
   ┌───────────────────────────────────────────────────────┐   S18
   │         Cause third subpixels to display third image    │
   └───────────────────────────────────────────────────────┘
                               │
   ┌───────────────────────────────────────────────────────┐   S19
   │       Cause fourth subpixels to display black image     │
   └───────────────────────────────────────────────────────┘
                               │
                        ┌─────────────┐
                        │     End     │
                        └─────────────┘
```

FIG. 11

EP 4 184 238 A1

FIG. 12

FIG. 13

EP 4 184 238 A1

## INTERNATIONAL SEARCH REPORT

| International application No. |
| --- |
| PCT/JP2021/026013 |

| A. CLASSIFICATION OF SUBJECT MATTER |
| --- |
| G02B 30/31(2020.01)i; G02B 27/01(2006.01)i; G09G 5/00(2006.01)i; G09G 5/36(2006.01)i; H04N 13/125(2018.01)i; H04N 13/305(2018.01)i; H04N 13/31(2018.01)i; H04N 13/317(2018.01)i; H04N 13/366(2018.01)i <br> FI:    G02B30/31; G09G5/36 510V; G09G5/00 550C; G09G5/00 530H; G09G5/36 520D; H04N13/317; H04N13/31; H04N13/125; H04N13/305; H04N13/366; G02B27/01 |
| According to International Patent Classification (IPC) or to both national classification and IPC |

| B. FIELDS SEARCHED |
| --- |
| Minimum documentation searched (classification system followed by classification symbols) <br> G02B30/31; G02B27/01; G09G5/00; G09G5/36; H04N13/125; H04N13/305; H04N13/31; H04N13/317; H04N13/366 |
| Documentation searched other than minimum documentation to the extent that such documents are included in the fields searched <br>      Published examined utility model applications of Japan          1922–1996 <br>      Published unexamined utility model applications of Japan      1971–2021 <br>      Registered utility model specifications of Japan                    1996–2021 <br>      Published registered utility model applications of Japan        1994–2021 |
| Electronic data base consulted during the international search (name of data base and, where practicable, search terms used) |

| C. DOCUMENTS CONSIDERED TO BE RELEVANT |  |  |
| --- | --- | --- |
| Category* | Citation of document, with indication, where appropriate, of the relevant passages | Relevant to claim No. |
| A | WO 2020/004275 A1 (KYOCERA CORP.) 02 January 2020 (2020-01-02) paragraphs [0014]-[0134], fig. 1-22 | 1–5 |
| A | WO 2020/130048 A1 (KYOCERA CORP.) 25 June 2020 (2020-06-25) paragraphs [0011]-[0088], fig. 1-14 | 1–5 |
| A | WO 2020/090626 A1 (KYOCERA CORP.) 07 May 2020 (2020-05-07) paragraphs [0008]-[0078], fig. 1-17 | 1–5 |
| A | JP 2014-106532 A (SAMSUNG DISPLAY CO., LTD.) 09 June 2014 (2014-06-09) paragraphs [0124]-[0145], fig. 31-38 | 1–5 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br>      10 September 2021 (10.09.2021) | Date of mailing of the international search report <br>      21 September 2021 (21.09.2021) |
| --- | --- |
| Name and mailing address of the ISA/ <br>      Japan Patent Office <br>      3-4-3, Kasumigaseki, Chiyoda-ku, <br>      Tokyo 100-8915, Japan | Authorized officer <br><br> Telephone No. |

Form PCT/ISA/210 (second sheet) (January 2015)

**INTERNATIONAL SEARCH REPORT**
Information on patent family members

International application No.

PCT/JP2021/026013

| Patent Documents referred in the Report | Publication Date | Patent Family | Publication Date |
|---|---|---|---|
| WO 2020/004275 A1 | 02 Jan. 2020 | (Family: none) | |
| WO 2020/130048 A1 | 25 Jun. 2020 | (Family: none) | |
| WO 2020/090626 A1 | 07 May 2020 | (Family: none) | |
| JP 2014-106532 A | 09 Jun. 2014 | EP 2736256 A1 paragraphs [0155]-[0176], fig. 18A-21B US 2014/0146040 A1 KR 10-2014-0067575 A CN 103841398 A | |

Form PCT/ISA/210 (patent family annex) (January 2015)